# EUROPÄISCHE PATENTSCHRIFT

(11) **EP 0 731 589 B1**
(45) Veröffentlichungstag und Bekanntmachung des Hinweises auf die Patenterteilung: **18.02.2004**
(21) Anmeldenummer: 96103579.7
(22) Anmeldetag: 07.03.1996
(51) Int. Cl.: H04M 1/02, H04M 1/72, H04M 1/725

(54) **Mobil betreibbares Kommunikationsgerät**
Mobile operable communication device
Appareil de communication en exploitation mobile

(30) Priorität: 07.03.1995 DE 19508003; 31.01.1996 DE 19603483
(43) Veröffentlichungstag der Anmeldung: 11.09.1996
(73) Patentinhaber: SIEMENS AKTIENGESELLSCHAFT, 80333 München (DE)
(72) Erfinder: Hillenmayer, Stefan, 81371 München (DE)

(56) Entgegenhaltungen:
- DE-A- 4 108 169
- PATENT ABSTRACTS OF JAPAN vol. 015, no. 397 (E-1120), 8. Oktober 1991 (1991-10-08) & JP 03 162023 A (MATSUSHITA ELECTRIC IND CO LTD), 12. Juli 1991 (1991-07-12)
- PATENT ABSTRACTS OF JAPAN vol. 018, no. 455 (E-1595), 24. August 1994 (1994-08-24) -& JP 06 141306 A (HITACHI LTD), 20. Mai 1994 (1994-05-20)

## Beschreibung

Die Erfindung betrifft ein mobil betreibbares Kommunikationsgerät, das mit einem Telefon sowie einem Notebook mit Display ausgestattet ist.

Derartige Geräte sind als Endgeräte für die Mobilkommunikation konzipiert und werden in der Literatur meist unter der Bezeichnung *Persönliche Digitale Assistenten (PDA)* geführt. Sie zeichnen sich neben ihrer Mobilität durch die Integration mehrerer, bislang in getrennten Einheiten realisierter Geräte und Funktionen in einem einzigen Apparat aus. So sind heute durch die fortgeschrittene Miniaturisierung in der Mikroelektronik bereits PDA-Geräte möglich, die neben einem Mobiltelefon und einem Notepad bzw. Notebook als integrierte Einheiten noch automatische Handschriftenerkennung auf einem berührungsempfindlichen Display sowie Terminalfunktionen wie z.B. das Senden und Empfangen von elektronischen Daten als Telefax, elektronische Post (E-Mail) über ein eingebautes Modem aufweisen (siehe z.B. NN, Gehilfe für die Jackentasche" in: Funkschau 12/1993, S. 8-22; Sheng, S. u.a., A Portable Multimedia Terminal" in: IEEE Comm. May, Dec. 1992, S. 64-75; NN, "Persönliche Digitale Assistenten" in: Funkschau 1/1994, S. 8-15). Ein solches, Beispiel ist in der Offenlegungsschrift DE-A-4 108 169 beschrieben.

Dem Anspruch, "Gehilfe für die Jackentasche" zu sein, werden die bisher bekannten und vertriebenen PDA-Geräte jedoch nur bedingt gerecht. Zwar handelt es sich dabei stets um tragbare und unabhängig von einem Netzanschluß betreibbare Geräte, ein handliches Gehäuse im "Taschenformat" und damit eine praktisch unbeschränkte Mobilität weisen sie jedoch wenn überhaupt nur bei stark eingeschränktem Funktionsumfang, z.B. dem Fehlen eines integrierten Telefonteils, auf. Auch werden die eingebauten Computer meist nur als "Notepads" und ohne Tastatur, statt als vollwertige und somit als Personalcomputer und Terminal verwendbare "Notebooks" angelegt.

Der Erfindung liegt daher die Aufgabe zugrunde, ein demgegenüber in seiner mobilen Einsetzbarkeit verbessertes Kommunikationsgerät mit integriertem Telefon und Notebook zu schaffen.

Gelöst wird diese Aufgabe durch ein mobil betreibbares Kommunikationsgerät, das die Kennzeichen des Patentanspruchs 1 angegebenen Merkmale aufweist.

Dabei wird die Integration der Gerätefunktionen in einem nur Taschenformat aufweisenden Gehäuse durch die platz- und gewichtsparende doppelte Verwendung des Displays als Anzeigeund Eingabevorrichtung für Notebook und Telefon begünstigt. Die bequeme Handhabung des Gerätes beim reinen Telefonbetrieb ist durch die Ausziehbarkeit des beweglichen Telefonteils gewährleistet. Von Vorteil ist weiterhin, daß bei vom aufgeklappten Gerät getrennten Telefonteil der gleichzeitige Betrieb von Telefon und Notebook möglich ist. Im zusammengeklappten Zustand des Kommunikationsgerätes befinden sich die Tastatur und das Display im Inneren des Gehäuses und sind so gegen mechanische Einwirkungen und Verletzungen, z.B. beim Transport in der sprichwörtlichen Jackentasche geschützt.

Die im Folgenden aufgeführten Ausführungsformen und Ausgestaltungen der Erfindung sind Gegenstand der Unteransprüche:

Bei einer ersten Ausführungsform ist das Telefon als im Kommunikationsgerät integriertes Mobiltelefon ausgebildet, wobei der bewegliche bzw. herausnehmbare Teil des Telefons bezüglich des Gerätes als schnurlos betriebener Handapparat betrieben wird.

Andererseits kann der bewegliche bzw. herausnehmbare Teil des Telefons bereits als komplettes, vom restlichen Gerät funktionell unabhängiges Mobiltelefon ausgelegt sein.

Bei einer dritten Ausführungsform handelt es sich bei dem Telefon als Ganzes um ein Schnurlostelefon mit externer, nicht zum Gerät selbst gehörender Basisstation. Diese Form ist dann zweckmäßig, wenn das Gerät nur in einem räumlich eng begrenzten Bereich, z.B. in einem Bürogebäude oder einem Firmengelände benutzt werden soll. Dadurch können die in diesem Fall unnötigen, hohen Telefongebühren eines Mobiltelefons vermieden werden.

Bei einer Weiterbildung des Kommunikationsgerätes verfügt das Notebook über ein Modem für die Übertragung von Daten über das Telefon. Damit wird, wie bereits erwähnt, das drahtlose Senden und Empfangen von elektronischen Daten z.B. als Telefax oder elektronische Post (E-Mail) möglich.

Gemäß einer Ausbildung des Kommunikationsgerätes sind in dem die Tastatur beherbergenden Gehäuseteil jeweils Schalldurchlaßöffnungen vorgesehen, die die Schallführung zu der im beweglichen Telefonteil untergebrachten Sprechkapsel sowohl im eingeschobenen als auch im ausgezogenen Zustand des beweglichen Telefonteils bei zusammengeklapptem Gerät gewährleisten.

Alternativ dazu kann aber nach einer Ausgestaltung der Erfindung auch auf die Schalldurchlaßöffnungen verzichtet werden, wenn in dem die Tastatur beherbergenden Gehäuseteil eine von der Außenseite des zusammengeklappten Geräts her anregbare, in dieser Gebrauchslage die Mikrofonfunktion von dem im beweglichen Telefonteil vorhandenen Wandler übernehmende, zusätzliche Sprechkapsel vorgesehen ist. Wird dann das bewegliche Telefonteil ausgezogen, so wird dabei neben der bequemeren Handhabung auch ein für die Qualität der Tonübertragung optimierter räumlicher Abstand zwischen Mikrofon und Lautsprecher bewirkt.
Gemäß einer zusätzlichen Ausgestaltung der Erfindung.kann der Klappmechanismus für die beiden Teilbereiche des Gehäuses im zusammengeklappten Zustand mechanisch verriegelt werden. Dadurch wird ein unbeabsichtigtes Öffnen des Gerätes im reinen Telefonbetrieb oder beim Transport verhindert und der Schutz von Tastatur und Display vor mechanischen Verletzungen bleibt gesichert.

Bei einer bevorzugten Ausführungsform des Kommunikationsgerätes ist das Gehäuse so ausgebildet, daß im aufgeklappten Zustand beide Gehäuseteile zusammen eine durchgehende Fläche bilden, wobei es für die Bedienungsfreundlichkeit zweckmäßig sein kann, daß Tastatur und Display eine gemeinsame Ebene aufspannen.

Nach einer weiteren Ausgestaltung der Erfindung ist das Gerät mit einem Menüstift ausgestattet, mit dessen Hilfe das berührungsempfindliche Display oder auch die alphanumerische Tastatur bedient werden kann, wobei in dem auch das Telefon beherbergenden Teilbereich des Gerätegehäuses eine Aufnahme für diesen Stift vorgesehen ist. Durch den Stift wird zum einen die Bedienungsfreundlichkeit des Displays als Eingabevorrichtung erhöht und zum anderen im Zusammenwirken mit geeigneter Software das Lesen, Erkennen und Auswerten von Hand mit dem Stift auf das Display geschriebener Informationen möglich.

Um den einfachen Anschluß des Kommunikationsgeräts an externe Geräte wie Kopfhörer, Drucker oder Personalcomputer zu ermöglichen, kann nach einer zusätzlichen Ausgestaltung am Gerät eine Multisteckerbuchse vorgesehen sein.

Dabei ist es aus Platzgründen zweckmäßig, daß die Multistekkerbuchse in dem für die Aufnahme des Menüstifts vorgesehenen Schacht untergebracht ist.

Nach einer Weiterbildung der Erfindung kann das Kommunikationsgerät durch eine am Gerät ansteckbare und dabei um eine Schwenkachse drehbare Kleinkamera ergänzt werden, die im Zusammenwirken mit dem Telefon bzw. dem Notebook mobile Videokonferenzen bzw. das Abfilmen und Einscannen von Objekten ermöglicht.

Nachstehend wird das erfindungsgemäße mobile Kommunikationsgerät anhand eines Ausführungsbeispiels unter Bezugnahme auf 10 Figuren näher erläutert.

Es zeigen :
Figur 1 einen zur Schwenkachse des Gehäuses senkrechten Querschnitt durch das Kommunikationsgerät im geschlossenen Zustand;
Figur 2 eine Aufsicht auf das des Kommunikationsgerät im geschlossenen Zustand bei eingeschobenem Display und Telefonteil;
Figur 3 eine Aufsicht auf das des Kommunikationsgerät im geschlossenen Zustand bei ausgezogenem Display und Telefonteil;
Figur 4 eine seitliche Ansicht auf das aufgeklappte Kommunikationsgerät in Richtung der Geräteachse;
Figur 5 eine Aufsicht auf das Kommunikationsgerät im aufgeklappten Zustand ;
Figur 6 eine seitliche Ansicht auf den vom aufgeklappten Gerät getrennten Telefonteil;
Figur 7 eine seitliche Ansicht auf das aufgeklappte Kommunikationsgerät im Videokonferenzbetrieb;
Figur 8 den vom Gerät getrennten Telefonteil in einer Aufsicht;
Figur 9 eine Aufsicht auf das Kommunikationsgerät im aufgeklappten Zustand bei abgetrenntem Telefonteil;
Figur 10 das Kommunikationsgerät im Einsatz als mobiler Scanner.

Das in den Figuren in verschiedenen Gebrauchslagen dargestellte mobile Kommunikationsgerät 1 besteht im wesentlichen aus zwei durch eine Schwenkachse 8 miteinander verbundene Teilbereichen 9 und 10, einem berührungsempfindlichen Display 3 und einem beweglichen, je nach Gebrauchslage abtrennbaren oder zusammen mit dem Display 3 aus dem Gerätegehäuse 6 ausziehbaren Telefonteil 2. Während im Teilbereich 9 des Gehäuses 6 eine alphanumerische Tastatur für das Notebook untergebracht ist, finden sich im Teilbereich 10 die elektronischen Baugruppen des Gerätes, das Display 3 sowie zwei Aufnahmeschächte 5 bzw. 7 für den beweglichen Telefonteil 2 bzw. einen für die Benutzung des als Touch-Screen eingesetzten Displays 3 vorgesehenen Menüstift 4. Als zusätzliche Ausstattung kann eine um eine Achse 27 drehbare Kleinkamera 26 seitlich an das Gerät 1 angebracht sein.

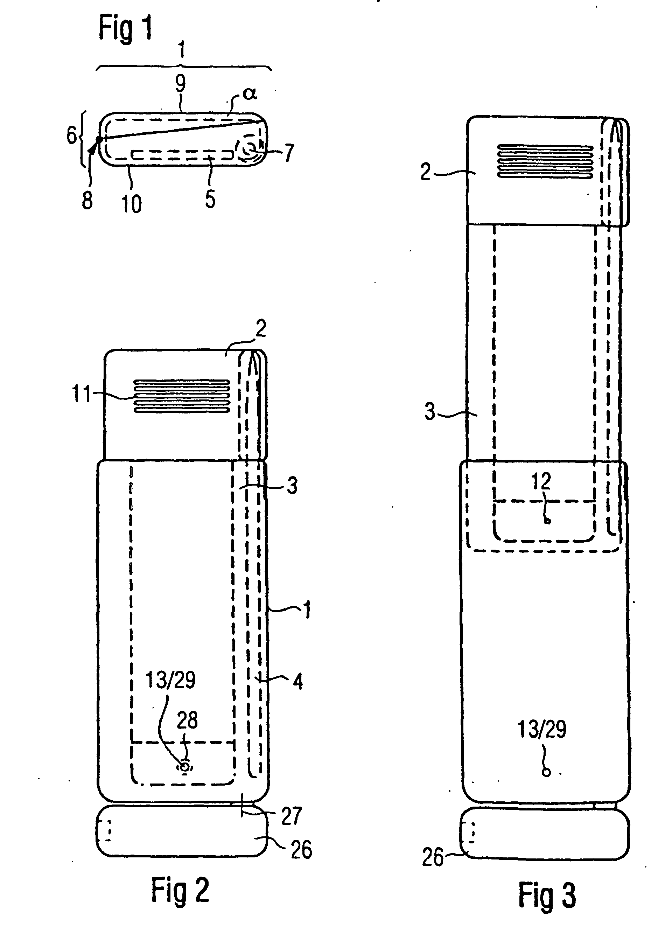

In der Figur 2 ist das erfindungsgemäße Kommunikationsgerät 1 im zum Transport zweckmäßigen zusammengeklappten Zustand dargestellt. Das Display 3 und der Großteil des ausziehbaren Telefonteils 2 befinden sich dabei vor mechanischen Einwirkungen geschützt im Inneren des Gerätegehäuses 6. Dabei sind das Display 3 und der Telefonteil 2 mechanisch miteinander verbunden, um das gemeinsame Ausziehen beider Teile aus dem Gehäuse 6 zu ermöglichen und in diesem Zustand das unbeabsichtigte Herausfallen des beweglichen Telefonteils 2 zu verhindern. In dieser Gebrauchslage ist bereits das Empfangen und Weiterführen von Telefongesprächen möglich. Um dabei die Schallführung vom Fernsprechteilnehmer zur im beweglichen Telefonteil 2 befindlichen Sprechkapsel 28 zu gewährleisten, befindet sich im Teilbereich 9 des Geräts eine Schalldurchlaßöffnung 13. Alternativ kann dafür aber auch eine zusätzliche, in dieser Gebrauchslage die Funktion der Sprechkapsel 28 übernehmende und von der Außenseite des Gerätes 1 anregbare Wandlerkapsel 29 vorgesehen sein. Der Kopfteil des ausziehbaren Telefonteils 2 weist weitere Schalldurchlaßöffnungen 11 zu der in seinem Inneren untergebrachten Hörkapsel auf. Der Menüstift 4 befindet sich beim Transport oder reinen Telefonbetrieb im Aufnahmeschacht 7 des Geräteteils 10. Als Zusatzausrüstung kann eine Kleinkamera 26 an dem , dem Kopfteil des Telefonteils 2 gegenüberliegenden Ende des Kommunikationsgeräts über eine Drehachse 27 angebracht sein.

In Figur 3 ist das erfindungsgemäße Kommunikationsgerät ebenfalls im zusammengeklappten Zustand, jedoch mit ausgezogenem Display 3 und Telefonteil 2 dargestellt. Diese Gebrauchslage zeichnet sich durch eine gute Handlichkeit des Geräts 1 aus und ermöglicht neben dem Empfangen und Weiterführen auch das Beginnen von Telefongesprächen, wobei das berührungsempfindliche Display 3 als Telefontastatur betrieben wird. Die Schallführung zur Sprechkapsel 28 wird durch eine weitere Schalldurchlaßöffnung 12 gewährleistet, hinter der die Wandlerkapsel 28 im ausgezogenen Zustand des Telefonteils 2 zu liegen kommt. Bei der bereits erwähnten, alternativen Version mit Zusatzmikrofon 29 anstelle der Öffnung 13 fällt auch die Schalldurchlaßöffnung 12 weg. Durch den vergrößerten Abstand zwischen Hör- und Sprechseite werden dabei außerdem unerwünschte Wechselwirkungen zwischen den beiden Seiten minimiert und somit die Qualität der Tonübertragung gesteigert.

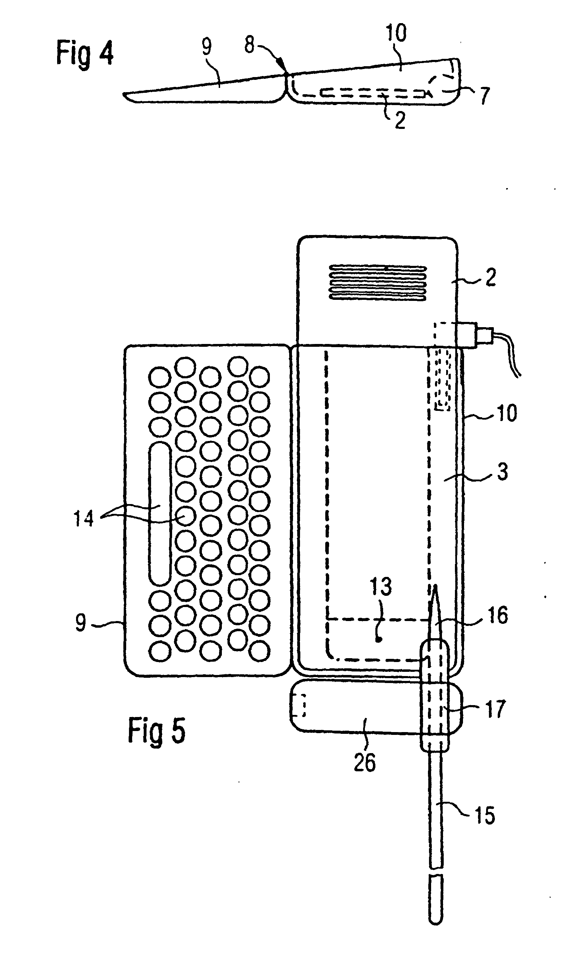

Die Figur 4 zeigt das aufgeklappte Kommunikationsgerät im Querschnitt in Blickrichtung entlang der Schwenkachse 8. Die Trennfläche zwischen beiden Geräteteilbereichen 9 und 10 verläuft beim zusammengeklappten Gerät 1 in einem spitzen Winkel α zur Außenfläche des Geräteteils 9 (siehe Gehäusequerschnitt in Figur 1). Dadurch ergibt sich im aufgeklappten Zustand des Geräts 1 eine ebene und durchgehende, durch die Tastatur 14 und das Display 3 aufgespannte Bedienungsoberfläche.

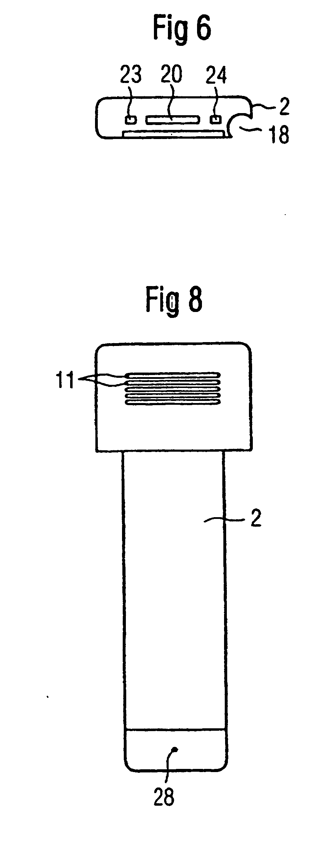

In einer Aufsicht ist in Figur 5 das aufgeklappte Kommunikationsgerät im reinen Notebook-Betrieb dargestellt, wobei Display 3 und Telefonteil 2 nicht ausgezogen werden. In der Zeichnung ist auch die im Aufnahmeschacht 7 für den Menüstift 4 untergebrachte Multisteckerbuchse 25 mit einem passenden Stecker zu sehen. Über diese Buchse 25 können externen Geräte wie z.B. Personalcomputer, Drucker, Tischscanner oder Diskettenlaufwerke usw. für die in beiden Richtungen mögliche Datenübertragung oder auch ein Kopfhörer angeschlossen werden. Im Notebook-Betrieb wird der Menüstift 4 aus seiner Aufnahme 7 genommen, um damit in bequemer Weise die alphanumerische Tastatur 14 zu bedienen oder vor allem auf dem als Touch-Screen betriebenen Display 3 Schaltfelder in Menüleisten zu aktivieren oder handschriftliche Eingaben tätigen zu können. Der Stift 4 selbst besteht aus einem stangenförmigen Hauptteil 15 mit einem spitz zulaufenden Ende 16 und einer hülsenartigen Handhabe 17. Um möglichst wenig Stauraum 7 im Gerätegehäuse 6 zu beanspruchen, weist der Hauptteil 15 des Stifts 4 zweckmäßigerweise einen maximalen Durchmesser auf, der geringer ist als etwa der eines handelsüblichen Holzbleistiftes. Eine bequeme Handhabung wird jedoch durch die als Griffbereich dienende Handhabe 17 erreicht, die mit einen angemessenen Durchmesser ausgebildet ist und nach Bedarf auf dem Hauptteil 15 des Stifts 4 verschoben werden kann. Wird der Menüstift 4 beim Transport oder Telefonbetrieb in den Schacht 7 eingesteckt, so findet die Handhabe 17 in der in etwa halbkreisförmigen Aussparung 18 im Kopf des Telefonteils.2 Platz (siehe Figur 6).

Der Betrieb des erfindungsgemäßen Kommunikationsgeräts 1 bei einer Videokonferenz ist in einer seitlichen Ansicht auf das aufgeklappte Gerät 1 in Figur 7 dargestellt. Die um die Achse 27 drehbare Kleinkamera 26 ist in Richtung des Teilnehmers geschwenkt und liefert bei jeder Videokonferenz, zumindest als Standbild, ein zusätzlich zum Ferngespräch über das Telefon übertragenes Bild. Ein ankommendes Videobild kann dabei auf dem Display 3 angezeigt werden.

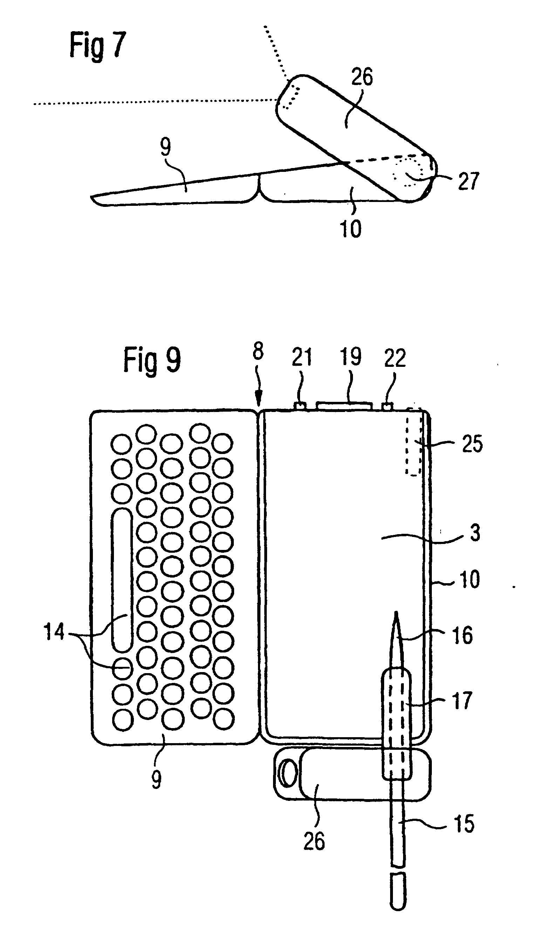

In den Figuren 8 und 9 ist in einer Aufsicht das in den Telefonteil 2 und den verbleibende Hauptteil des Gerätes getrennte, erfindungsgemäße Kommunikationsgerät 1 dargestellt. In diesem Zustand ist der simultane Betrieb von Telefon und Notebook möglich, wobei das Display 3 wahlweise oder gleichzeitig beiden Funktionen zur Verfügung steht.
Die Stromversorgung des Gerätes 1 erfolgt durch eine im Gehäuse 6 untergebrachte wiederaufladbare Batteriezelle, die über die Kontaktstellen 21 und 22 geladen werden kann. Eine weitere, den beweglichen Telefonteil 2 versorgende und darin untergebrachte, ladbare Batterie wird bei eingeschobenem Telefonteil 2 von der Hauptzelle aus über die Kontaktelemente 21, 22 und entsprechende Gegenkontakte 23 und 24 gespeist. Dabei wird das unbeabsichtigte Herausgleiten des Telefonteils 2 aus seiner Aufnahme 5 durch das in die Vertiefung 20 eingreifende Rastelement 19 verhindert (siehe Figur 6 und Figur 9).

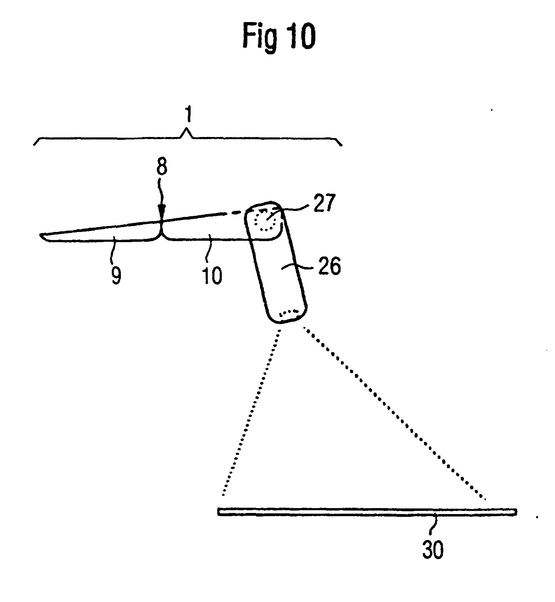

Die Figur 10 zeigt das erfindungsgemäße Kommunikationsgerät 1 im Einsatz als mobiler Scanner, wobei die um die Achse 27 drehbare Kleinkamera 26 in entsprechendem Abstand auf ein abzufilmendes bzw. einzuscannendes Objekt 30 gerichtet wird.

## Patentansprüche

1. Mobil betreibbares Kommunikationsgerät (1) mit Telefon und Notebook mit Display (3), wobei
- das Taschenformat aufweisende Gerätegehäuse (6) aus zwei durch eine Schwenkachse (8) untereinander verbundenen Teilbereichen (9, 10) besteht und aufklappbar ist, wobei der eine Teilbereich (10) eine Aufnahme (5) für den Telefonteil und das Display (3) enthält, während der andere Teilbereich (9) eine für den Benutzer zugängliche Tastatur (14) aufweist,
- das Display (3) als berührungsempfindliche Anzeigevorrichtung ausgebildet ist, über die je nach Betriebszustand Eingaben für das Notebook und bzw. oder das Telefon erfolgen können,
- das Telefon, zumindest jedoch ein als Handapparat dienender und bezüglich des einen Teilbereichs (10) beweglicher Teil (2) davon, im aufgeklappten Zustand des Kommunikationsgerätes (1) drahtlos vom Gerät trennbar ist, wobei der gleichzeitige Betrieb von Telefon und Notebook möglich ist, und
- beim reinen Telefonbetrieb der bewegliche Teil (2) des Telefons im zusammengeklappten Zustand des Kommunikationsgeräts (1) mechanisch mit dem Display (3) verbunden und zusammen damit fast gänzlich aus der Aufnahme (5) herausziehbar ist, wobei das berührungsempfindliche Display (3) als Telefontastatur betrieben wird.

2. Kommunikationsgerät nach Anspruch 1,
**dadurch gekennzeichnet,**
**daß** das Telefon als im Kommunikationsgerät (1) integriertes Mobiltelefon ausgebildet ist, wobei der bewegliche bzw. herausnehmbare Teil (2) des Telefons bezüglich des Kommunikationsgeräts (1) als schnurlos betriebener Handapparat betrieben wird.

3. Kommunikationsgerät nach Anspruch 1,
**dadurch gekennzeichnet,**
**daß** der bewegliche bzw. vom Kommunikationsgerät (1) abtrennbare Teil (2) des Telefons bereits ein komplettes, zumindest bis auf eine Eingabevorrichtung funktionell unabhängiges Mobiltelefon darstellt.

4. Kommunikationsgerät nach Anspruch 1,
**dadurch gekennzeichnet,**
**daß** das Telefon als Ganzes als Schnurlostelefon mit nicht zum Kommunikationsgerät (1) selbst gehörender Basisstation ausgebildet ist.

5. Kommunikationsgerät nach einem der vorhergehenden Ansprüche,
**dadurch gekennzeichnet,**
**daß** das Notebook über ein Modem für die Übertragung von Daten über das Telefon verfügt.

6. Kommunikationsgerät nach einem der vorhergehenden Ansprüche,
**dadurch gekennzeichnet,**
**daß** im anderen Teilbereich des Gerätegehäuses (9) jeweils Schalldurchlaßöffnungen (12, 13) vorgesehen sind, die die Schallführung zu der auf dem beweglichen Telefonteil (2) untergebrachten Sprechkapsel (28) sowohl im eingeschobenen als auch im ausgezogenen Zustand des beweglichen Telefonteils (2) bei zusammengeklapptem Kommunikationsgerät (1) ermöglichen.

7. Kommunikationsgerät nach den Ansprüchen 1 bis 5,
**dadurch gekennzeichnet,**
**daß** im anderen Teilbereich des Gerätegehäuses (9) eine Wandlerkapsel (29) vorgesehen ist, die in der zusammengeklappten Gebrauchslage des Kommunikationsgeräts (1) anstelle der im beweglichen Telefonteil (2) vorhandenen Sprechkapsel (28) als Mikrofon fungiert.

8. Kommunikationsgerät nach einem der vorhergehenden Ansprüche,
**dadurch gekennzeichnet,**
**daß** der Klappmechanismus für die beiden Teilbereiche (9,10) des Gerätegehäuses (6) im zusammengeklappten Zustand mechanisch verriegelbar ist.

9. Kommunikationsgerät nach einem der vorhergehenden Ansprüche,
**dadurch gekennzeichnet,**
**daß** im aufgeklappten Zustand beide Teilbereiche (9,10) des Gerätegehäuses zusammen eine durchgehende, ebene Bedienungsoberfläche bilden.

10. Kommunikationsgerät nach einem der vorhergehenden Ansprüche,
**dadurch gekennzeichnet,**
**daß** das Kommunikationsgerät (1) mit einem Menüstift (4) ausgestattet ist, mit dessen Hilfe das berührungsempfindliche Display (3) bedienbar ist, und daß in dem auch das Telefon beherbergenden Teilbereich (10) des Gerätegehäuses (6) ein Aufnahmeschacht (7) für diesen Stift (4) vorgesehen ist.

11. Kommunikationsgerät nach einem der vorhergehenden Ansprüche,
**dadurch gekennzeichnet,**
**daß** am Kommunikationsgerät (1) eine Multisteckerbuchse (25) für den Anschluß an externe Geräte vorgesehen ist.

12. Kommunikationsgerät nach den Ansprüchen 10 und 11,
**dadurch gekennzeichnet,**
**daß** die Multisteckerbuchse (25) in dem für die Aufnahme des Menüstifts (4) vorgesehenen Schacht (7) untergebracht ist.

13. Kommunikationsgerät nach einem der vorhergehenden Ansprüche,
**dadurch gekennzeichnet,**
**daß** am Kommunikationsgerät (1) eine um eine Schwenkachse(27) drehbare Kamera (26) angebracht ist, die im Zusammenwirken mit dem Telefon bzw. dem Notebook mobile Videokonferenzen bzw. das Abfilmen und Einscannen von Objekten(30)ermöglicht.

## Claims

1. Communication appliance (1) for mobile operation having a telephone and a Notebook with a display (3), where
- the appliance housing (6), which is in pocket format, comprises two subregions (9, 10) connected to one another by a pivot axis (8) and can be folded out, one subregion (10) containing a receptacle (5) for the telephone part and the display (3) while the other subregion (9) has a keypad (14) which is accessible to the user,
- the display (3) is in the form of a touch-sensitive display apparatus which can be used, depending on the operating state, to make inputs for the Notebook and/or for the telephone,
- the telephone, or at least a part (2) thereof which serves as a handset and can move relative to one subregion (10), can be wirelessly separated from the appliance when the communication appliance (1) is in the folded-out state, with simultaneous operation of the telephone and Notebook being possible, and
- for pure telephone operation the moving part (2) of the telephone in the folded-up state of the communication appliance (1) is mechanically connected to the display (3) and, together therewith, can be pulled out of the receptacle (5) almost entirely, the touch-sensitive display (3) being operated as a telephone keypad.

2. Communication appliance according to Claim 1,
**characterized**
**in that** the telephone is in the form of a mobile telephone incorporated in the communication appliance (1), the moving or removable part (2) of the telephone being operated as a cordlessly operated handset for the communication appliance (1).

3. Communication appliance according to Claim 1,
**characterized**
**in that** the moving part (2), or the part which can be separated from the communication appliance (1), of the telephone is itself a complete mobile telephone which is functionally independent at least as far as an input apparatus.

4. Communication appliance according to Claim 1,
**characterized**
**in that** the telephone as a whole is in the form of a cordless telephone with a base station which is not part of the communication appliance (1) itself.

5. Communication appliance according to one of the preceding claims,
**characterized**
**in that** the Notebook has a modem for transmitting data via the telephone.

6. Communication appliance according to one of the preceding claims,
**characterized**
**in that** the other subregion of the appliance housing (9) contains respective sound apertures (12, 13) which allow sound to be routed to the transmitter capsule (28) accommodated on the moving telephone part (2) both in the inserted and in the pulled-out state of the moving telephone part (2) when the communication appliance (1) has been folded up.

7. Communication appliance according to one of Claims 1 to 5,
**characterized**
**in that** the other subregion of the appliance housing (9) contains a transducer capsule (29) which acts as a microphone instead of the transmitter capsule (28) provided in the moving telephone part (2) when the communication appliance (1) is in the folded-up operating position.

8. Communication appliance according to one of the preceding claims,
**characterized**
**in that** the folding mechanism for the two subregions (9, 10) of the appliance housing (6) can be mechanically locked in the folded-up state.

9. Communication appliance according to one of the preceding claims,
**characterized**
**in that**, in the folded-out state, the two subregions (9, 10) of the appliance housing together form a continuous, planar user interface.

10. Communication appliance according to one of the preceding claims,
**characterized**
**in that** the communication appliance (1) is equipped with a menu stylus (4) which can be used to operate the touch-sensitive display (3), and in that the subregion (10) of the appliance housing (6) which also accommodates the telephone contains a holding compartment (7) for this stylus (4).

11. Communication appliance according to one of the preceding claims,
**characterized**
**in that** the communication appliance (1) has a multiconnector socket (25) on it for connection to external appliances.

12. Communication appliance according to Claims 10 and 11,
**characterized**
**in that** the multiconnector socket (25) is accommodated in the compartment (7) provided for holding the menu stylus (4).

13. Communication appliance according to one of the preceding claims,
**characterized**
**in that** the communication appliance (1) has a camera (26) mounted on it which can rotate about a pivot axis (27) and, in interaction with the telephone or the Notebook, allows mobile video conferences or filming and scanning of objects (30).

## Revendications

1. Appareil de communication (1) pouvant fonctionner d'une façon mobile et comportant un téléphone et un ordinateur portatif (ou, en anglais, notebook) avec un écran (3),
- le boîtier (6) de l'appareil, qui a le format poche, se composant de deux parties (9, 10) reliées l'une à l'autre par un axe de pivotement (8) et étant repliable, une des parties (10) renfermant un logement (5) pour le bloc téléphonie et l'écran (3), alors que l'autre partie (9) comporte un clavier (14) accessible à l'utilisateur,
- l'écran (3) étant conçu comme dispositif tactile d'affichage, par l'intermédiaire duquel, suivant l'état de fonctionnement, on peut procéder à des entrées destinées à l'ordinateur portatif et/ou au téléphone,
- le téléphone, toutefois au moins une partie (2) du téléphone, qui sert de combiné et qui est mobile par rapport à la partie (10) du boîtier, pouvant être séparé sans cordon de l'appareil, dans l'état ouvert de l'appareil de communication (1), l'exploitation simultanée du téléphone et de l'ordinateur portatif étant possible, et,
- dans le cas d'une exploitation purement téléphonique, la partie mobile (2) du téléphone étant reliée, dans l'état replié de l'appareil de communication (1), mécaniquement à l'écran (3) et pouvant, ainsi, être presque complètement extraite du logement (5), l'écran tactile (3) étant utilisé comme clavier pour le téléphone.

2. Appareil de communication selon la revendication 1
**caractérisé par le fait**
**que** le téléphone est conçu comme téléphone mobile intégré dans l'appareil de communication (1), la partie (2), mobile ou pouvant être extraite, du téléphone étant exploitée, par rapport à l'appareil de communication (1), comme combiné téléphonique fonctionnant sans cordon.

3. Appareil de communication selon la revendication 1
**caractérisé par le fait**
**que** la partie (2), mobile ou pouvant extraite de l'appareil de communication (1), du téléphone constitue déjà un téléphone mobile complet, fonctionnellement indépendant, au moins un dispositif de saisie mis à part.

4. Appareil de communication selon la revendication 1
**caractérisé par le fait**
**que** le téléphone est conçu comme entité intrinsèque, en tant que téléphone sans cordon avec une station de base, qui ne fait elle-même pas partie de l'appareil de communication (1).

5. Appareil de communication selon l'une des revendications précédentes
**caractérisé par le fait**
**que** l'ordinateur portatif dispose d'un modem pour la transmission de données par l'intermédiaire du téléphone.

6. Appareil de communication selon l'une des revendications précédentes
**caractérisé par le fait**
**que**, dans l'autre partie (9) du boîtier de l'appareil, des ouvertures (12, 13) de traversée pour le son sont prévues, lesquelles permettent de guider le son vers la capsule microphonique (28) logée sur la partie (2) mobile du téléphone, aussi bien dans l'état encastré que dans l'état extrait de la partie (2) mobile du téléphone, lorsque l'appareil de communication (1) est replié.

7. Appareil de communication selon les revendications 1 à 5
**caractérisé par le fait**
**que**, dans l'autre partie (9) du boîtier de l'appareil, il est prévu une capsule microphonique (29) qui sert, dans la position d'utilisation repliée de l'appareil de communication (1), de microphone au lieu de la capsule microphonique (28) qui se trouve dans la partie (2) mobile du téléphone.

8. Appareil de communication selon l'une des revendications précédentes
**caractérisé par le fait**
**que** le mécanisme repliable pour les deux parties (9, 10) du boîtier (6) de l'appareil peut être verrouillé mécaniquement dans son état replié.

9. Appareil de communication selon l'une des revendications précédentes
**caractérisé par le fait**
**que**, dans l'état replié, les deux parties (9, 10) du boîtier de l'appareil forment ensemble une surface de commande continue et plane.

10. Appareil de communication selon l'une des revendications précédentes
**caractérisé par le fait**
**que** l'appareil de communication (1) est équipé d'un crayon optique (4), à l'aide duquel l'écran tactile (3) peut être commandé, et que, dans la partie (10), qui renferme également le téléphone, du boîtier (6) de l'appareil, il est prévu un logement (7) pour ce crayon optique (4).

11. Appareil de communication selon l'une des revendications précédentes
**caractérisé par le fait**
**que**, sur l'appareil de communication (1), il est prévu une douille multifiche (25) pour le raccordement d'appareils externes.

12. Appareil de communication selon les revendications 10 et 11
**caractérisé par le fait**
**que** la douille multifiche (25) est disposée dans le logement (7) prévu pour recevoir le crayon optique (4).

13. Appareil de communication selon l'une des revendications précédentes
**caractérisé par le fait**
**que**, sur l'appareil de communication (1), une caméra (26) est fixée d'une façon telle qu'elle peut pivoter autour d'un axe de pivotement (27), et qu'elle permet, en collaboration avec le téléphone et/ou l'ordinateur portatif, de réaliser des conférences vidéo ou de faire des prises de vues et de scanner des objets (30).
